# EUROPEAN PATENT SPECIFICATION

(11) **EP 3 734 045 B1**
(45) Date of publication and mention of the grant of the patent: **19.02.2025**
(21) Application number: 19210403.2
(22) Date of filing: 20.11.2019
(51) Int. Cl.: F02C 7/32, F02C 7/22, F02C 7/236

(54) **FUEL DELIVERY SYSTEM FOR GAS TURBINE ENGINE**
KRAFTSTOFFFÖRDERSYSTEM FÜR EINEN GASTURBINENMOTOR
SYSTÈME DE DISTRIBUTION DE CARBURANT POUR MOTEUR À TURBINE À GAZ

(30) Priority: 29.04.2019 US 201916396969
(43) Date of publication of application: 04.11.2020
(73) Proprietor: Hamilton Sundstrand Corporation, Charlotte, NC 28217-4578 (US)
(72) Inventor: CARPENTER, Richard J., Gales Ferry, CT Connecticut 06335 (US); RIBAROV, Lubomir A., West Hartford, CT Connecticut 06107 (US); KOVACH, Brandon T., Rockford, IL Illinois 61103 (US); LE DUC, Zachary Allen Ray, Rockford, IL Illinois 61107 (US); RICKIS, Aaron F., Longmeadow, MA 01106 (US); REUTER, Charles E., Granby, CT Connecticut 06035 (US); SCHELONKA, Michael D., Elgin, IL Illinois 60123 (US); HODGE, William D., Charlotte, NC North Carolina 28217 (US); DAVIS, Christopher J., Charlotte, NC North Carolina 28217 (US)
(74) Representative: Dehns

(56) References cited:
- DE-B- 1 024 289
- KR-B1- 101 291 769
- US-A1- 2007 265 761
- US-A1- 2016 186 670
- US-A1- 2017 130 834
- US-A1- 2018 050 812
- US-A1- 2018 171 815

## Description

### BACKGROUND

### 1. Field

The subject invention is fuel delivery system for a gas turbine engine, and more particularly, to a continuously variable transmission for a fuel pump employed with a gas turbine engine.

### 2. Description of Related Art

Continuously variable transmission (CVT) systems are well known in the art for adjusting ratios of input speed to output speed in a machine or vehicle. Typically, a mechanism for adjusting the ratio of an output speed to an input speed in a CVT is known as a variator. In a belt-type CVT, the variator consists of two adjustable pulleys coupled to one another by a belt. Typically, a governor is used to control the variator so that the desired speed ratio can be achieved in operation.

In an aircraft gas turbine engine, overall system sizing can drive opposing sizing points for fuel pumps, making an optimized engine package difficult to achieve. For example, a positive displacement pump that is sized for high engine power conditions such as take-off may not provide sufficient fuel flow at engine start and at low engine shaft speed. In contrast, sizing fuel pumps only for engine start conditions can result in excess fuel pumping capability at high engine shaft speeds.

Larger or oversized fuel pump volumes can result in undesirable design consequences that can have a negative impact on system integrity, weight, envelope and thermal management. US 2016/186670 A1 describes a fuel system. US 2018/050812 A1 describes aircraft fuel pump systems.

### SUMMARY OF THE DISCLOSURE

The invention is defined in claim 1 and directed to a new and useful fuel delivery system for a gas turbine engine which includes a continuously variable drive assembly having a driving portion operatively associated with a gearbox of the gas turbine and a driven portion operatively associated with a fuel pump of the gas turbine, and a governor for controlling a drive ratio of the drive assembly to vary fuel pump flow performance over a range of engine operating conditions. The drive assembly includes a driving pulley assembly including a fixed pulley sheave and a movable pulley sheave, a driven pulley assembly including a fixed pulley sheave and a movable pulley sheave, and a drive belt operatively connecting the driving pulley assembly to the driven pulley assembly. The drive assembly is governed to drive the fuel pump faster than the gearbox in a start mode wherein engine fuel flow demand is relatively high, and it is governed to drive the fuel pump slower than the gearbox in a cruise mode wherein engine fuel flow demand is relatively low.

It is envisioned that the fuel pump would be sized to meet engine fuel flow demand for a specific engine operating condition. In a preferred embodiment of the subject invention, the fuel pump is sized to meet engine fuel flow demand in a take-off mode.

The driving portion of the drive assembly is connected to an input shaft driven by the gearbox and the driven portion of the drive assembly is connected to a drive shaft of the fuel pump.

The subject invention is also directed to a fuel delivery system for a gas turbine engine that includes a gearbox operatively associated with the gas turbine engine, a fuel pump sized to meet engine fuel flow demand for a specific engine operating condition (e.g., a take-off mode), a continuously variable drive assembly having a driving portion operatively associated with the gearbox and a driven portion operatively associated with the fuel pump, and a governor for controlling a drive ratio of the drive assembly to vary fuel pump flow performance over a range of engine operating conditions. The drive assembly is governed to drive the fuel pump faster than the gearbox in a start mode wherein engine fuel flow demand is relatively high, and to drive the fuel pump slower than the gearbox in a cruise mode wherein engine fuel flow demand is relatively low.

The subject invention is also directed to a fuel delivery method for a gas turbine engine which includes the steps of providing a continuously variable drive assembly between a gearbox of the gas turbine engine and a fuel pump of the gas turbine engine, and varying a drive ratio of the drive assembly to adjust fuel pump flow to the gas turbine engine over a range of engine operating conditions in response to input from the gearbox.

In an embodiment of the invention, varying the drive ratio of the drive assembly involves requesting or otherwise scheduling a reduction of the drive ratio from start mode to maximum engine power. In another embodiment of the invention, varying the drive ratio of the drive assembly involves requesting or otherwise scheduling a reduction of the drive ratio immediately after start mode. This can be accomplished by the governor.

The method further includes sizing the fuel pump to meet fuel flow demand for a specific engine operating condition (e.g., a take-off mode). The step of varying the drive ratio of the drive assembly involves driving the fuel pump faster than the gearbox in a start mode wherein engine fuel flow demand is relatively high, and driving the fuel pump slower than the gearbox in a cruise mode wherein engine fuel flow demand is relatively low.

These and other features of the subject invention will become more readily apparent to those having ordinary skill in the art to which the subject invention appertains from the detailed description of the preferred embodiments taken in conjunction with the following brief description of the drawings.

### BRIEF DESCRIPTION OF THE DRAWINGS

So that those having ordinary skill in the art will readily understand how to make and use the subject invention without undue experimentation, preferred embodiments thereof will be described in detail herein below with reference to the figures wherein:
Fig. 1 is a schematic view of the fuel delivery system of the subject invention with the continuously variable drive assembly where the gearbox drive speed is equal to the fuel pump input shaft speed (e.g., a take-off mode);
Fig. 2 is a schematic view of the fuel delivery system of the subject invention with the continuously variable drive assembly where the gearbox drive speed is slower than the fuel pump input shaft speed (e.g., a start mode); and
Fig. 3 is a schematic view of the fuel delivery system of the subject invention with the continuously variable drive assembly where the gearbox drive speed is faster than the fuel pump input shaft speed (e.g., a cruise mode).

### DETAILED DESCRIPTION OF THE PREFERRED EMBODIMENTS

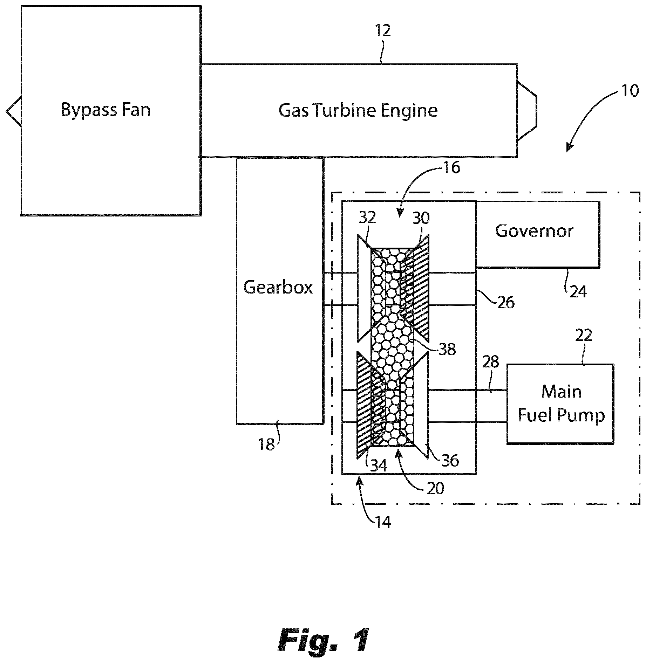

Referring now to the drawings wherein like reference numerals identify similar structural features or elements of the subject invention, there is illustrated in Fig. 1 a fuel delivery system 10 for a gas turbine engine 12 employed on an aircraft or the like.

The fuel delivery system 10 of the subject invention includes a continuously variable drive assembly 14 having a driving portion 16 operatively associated with a gearbox 18 of the gas turbine engine 12 and a driven portion 20 operatively associated with a main fuel pump 22 of the gas turbine engine 12, and a governor 24 for controlling a drive ratio of the drive assembly 14 to vary fuel pump flow performance over a range of engine operating conditions.

By way of non-limiting example, the fuel pump 22 can be configured as a positive displacement gear pump or the like. Furthermore, those skilled in the art will readily appreciate that the governor 24 that controls the drive assembly can be configured as an electronic controller, a mechanical controller or an electro-mechanical controller.

The driving portion 16 of the drive assembly 14 is connected to a drive shaft 26 driven by the gearbox 18 and the driven portion 20 of the drive assembly 14 is connected to an input shaft 28 of the fuel pump 22. The driving portion 16 of drive assembly 14 includes a fixed pulley sheave 30 and a movable pulley sheave 32. The driven portion 20 of the drive assembly 14 includes a fixed pulley sheave 34 and a movable pulley sheave 36. A drive belt 38 operatively connect the driving portion 16 of drive assembly 14 to the driven portion 20 of drive assembly 14. The drive belt 38 is preferably a V-shaped drive belt made from rubber or a similar material, which increases the frictional grip of the belt.

In accordance with a preferred embodiment of the subject invention, the fuel pump 22 is sized to meet engine fuel flow demand in a take-off mode. Moreover, the main gear stage of fuel pump 22 is sized for optimum operational efficiency during take-off. It follows that the gearbox 18 is designed to operate most efficiently at a speed that coincides with the take-off mode.

Thus, in the take-off mode shown in Fig. 1, the movable pulley sheave 32 of the driving portion 16 of drive assembly 14 and the movable pulley sheave 36 of the driven portion 20 of drive assembly are aligned in a neutral position. Consequently, the speed of the drive shaft 26 associated with the gearbox 18 is equal to the speed of the input shaft 28 associated with the fuel pump 22.

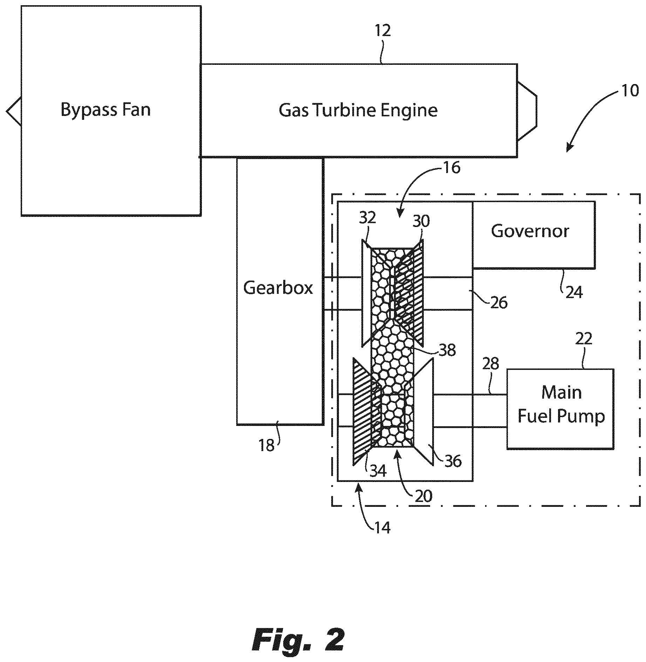

Referring now to Fig. 2, in a start mode wherein engine fuel flow demand is relatively high, the governor 24 will adjust the drive assembly 14 to drive the fuel pump 22 faster than the gearbox 18. To accomplish this result, the movable pulley sheave 32 of the driving portion 16 of drive assembly 14 remains in a neutral position while the movable pulley sheave 36 of the driven portion 20 of drive assembly 14 is displaced from the fixed pulley sheave 36. As a consequence, the speed of the input shaft 28 associated with the fuel pump 22 is increased, so that it is faster than the speed of the drive shaft 26 of the gearbox 18.

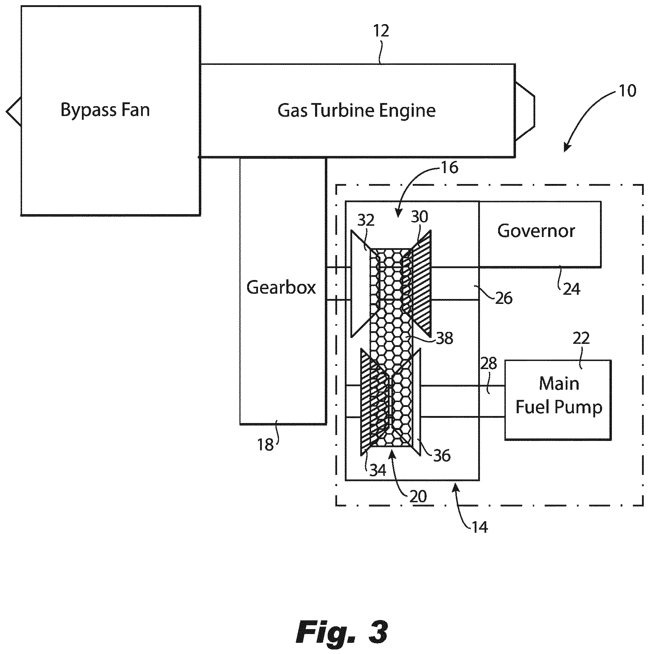

Referring to Fig. 3, in a cruise mode wherein engine fuel flow demand is relatively low, the governor 24 will adjust the drive assembly 14 to drive the fuel pump 22 slower than the gearbox 18. To accomplish this result, the movable pulley sheave 32 of the driving portion 16 of drive assembly 14 is displaced from the fixed pulley 30 of the driving portion 16, while the movable pulley sheave 36 of the driven portion 20 of drive assembly 14 remains in a neutral position. Consequently, the speed of the drive shaft 28 associated with the fuel pump 22 is reduced, so that it is slower than the speed of the gearbox 18.

While it is desirable in this instance for the fuel pump 22 to be sized to meet engine fuel flow demand in a take-off mode, those skilled in the art will readily appreciate that the size of the fuel pump could be optimized to meet engine fuel flow demand for any operating condition over a range of engine operating conditions, including, but not limited to a take-off mode.

The subject invention is also directed to a fuel delivery method for a gas turbine engine 12 which includes the steps of providing a continuously variable drive assembly 14 between a gearbox 18 of the gas turbine engine 12 and a main fuel pump 22 of the gas turbine engine 12, and varying a drive ratio of the drive assembly 14 to adjust fuel pump flow to the gas turbine engine 12 over a range of engine operating conditions in response to input from the gearbox 18.

The method further includes sizing the fuel pump 22 to meet fuel flow demand in a take-off mode, as best seen in Fig. 1. The step of varying the drive ratio of the drive assembly 14 involves driving the fuel pump 22 faster than the gearbox 18 in a start mode wherein engine fuel flow demand is relatively high, as shown in Fig. 2, and driving the fuel pump 22 slower than gearbox 18 in a cruise mode wherein engine fuel flow demand is relatively low, as shown in Fig. 3.

It is envisioned that using the continuously variable drive assembly 14 to increase pump shaft speed at initial start-up conditions and subsequently varying the drive ratio of the drive assembly 14 down at higher engine power, enables the use of a fuel pump 22 that is optimally sized for take-off conditions. In this regard, varying the drive ratio of the drive assembly 14 can involve requesting or otherwise scheduling a reduction of the drive ratio from engine start to maximum engine power. Alternatively, varying the drive ratio of the drive assembly 14 can involve requesting or otherwise scheduling a reduction of the drive ratio immediately after engine start. This can be accomplished by the governor 24.

Those skilled in the art will readily appreciate that the subject invention provides several benefits. These benefits include an optimized fuel pump package (i.e., minimal operational volume, size and weight); minimized fuel pump bearing sizing and internal leakage(s); and more precise tailoring between the engine shaft input speed and the operational envelope of the fuel pump throughout the flight cycle of the aircraft. In addition, the on-demand nature of the system of the subject invention enables more accurate pressure regulation and flow metering of fuel to the engine.

There are also fuel system thermal benefits achieved by the system of the subject invention. For example, with an optimized fuel pump, there will be less return-to-tank fuel flow, which will make the system more fuel efficient. Another benefit involves easier engine re-start following an engine In-Flight Shut Down (IFSD) event, since the CVT would allow higher rotational speed of the fuel pump for a given gearbox drive shaft rotational speed. Moreover, since the gearbox drive shaft rotational speed is proportional to the engine's N2 shaft rotational speed, it becomes critical that following an IFSD, the free wind-milling of the shut-down engine is sufficient to drive the gearbox, which in turn, drives the main fuel pump to provide sufficient fuel flow and pressure to facilitate combustor light-up.

There will also be less residual kinetic heat deposited into the fuel by having a smaller pump. Consequently, there will be more opportunity to use the fuel in the system as a waste heat sink for other onboard systems (e.g., mechanical, electrical, electro-mechanical, electronic, hydraulic, lubricating, pneumatic, etc.) which are rejecting waste heat into the fuel. Additional benefits of the subject invention include improved overall on-board power thermal management capabilities.

While the subject disclosure has been shown and described with reference to preferred embodiments, those skilled in the art will readily appreciate that changes and/or modifications may be made thereto without departing from the scope of the subject disclosure.

## Claims

1. A fuel delivery system for a gas turbine engine (12) comprising:
a) a fuel pump (22); a gearbox (18) and
b) a continuously variable drive assembly (14) in operable communication with both the fuel pump (22) and the gas turbine engine through the gearbox (18) and being configured to adjust fuel pump (22) output to align with fuel demand of the gas turbine engine, and wherein the drive assembly (14) includes a driving pulley assembly including a fixed pulley sheave (30) and a movable pulley sheave (32), a driven pulley assembly including a fixed pulley sheave (30) and a movable pulley sheave (32), and a drive belt operatively connecting the driving pulley assembly to the driven pulley assembly; and
further comprising a governor for controlling a drive ratio of the drive assembly (14) to vary fuel pump flow performance over a range of engine operating conditions, and wherein the drive assembly (14) is governed to drive the fuel pump (22) faster than the gearbox (18) in a start mode wherein engine fuel flow demand is relatively high and governed to drive the fuel pump (22) slower than the gearbox (18) in a cruise mode wherein engine fuel flow demand is relatively low.

2. The fuel delivery system as recited in claim 1, wherein the continuously variable drive assembly (14) has a driving portion operatively associated with a gearbox (18) of the gas turbine and a driven portion operatively associated with the fuel pump (22) of the gas turbine.

3. The fuel delivery system as recited in any preceding claim, wherein the fuel pump (22) is sized to meet engine fuel flow demand for a specific engine operating condition.

4. The fuel delivery system as recited in claim 1, wherein the driving portion of the drive assembly (14) is connected to an input shaft driven by the gearbox (18) and the driven portion of the drive assembly (14) is connected to an input shaft of the fuel pump.

5. The fuel delivery system of claim 1 further comprising:
a gearbox (18) operatively associated with the gas turbine engine;
a fuel pump (22) sized to meet engine fuel flow demand for a specific engine operating condition;
the continuously variable drive assembly (14) having a driving portion operatively associated with the gearbox (18) and a driven portion operatively associated with the fuel pump; and
said governor for controlling a drive ratio of the drive assembly (14) to vary fuel pump flow performance over a range of engine operating conditions.

6. The fuel delivery system as recited in any preceding claim, wherein the fuel pump (22) is sized to meet engine fuel flow demand in a take-off mode.

7. A fuel delivery method for a gas turbine engine (12) comprising:
a) providing a continuously variable drive assembly (14) between a gearbox (18) of the gas turbine engine (12) and a fuel pump (22) of the gas turbine engine; and
b) varying a drive ratio of the drive assembly (14) to adjust fuel pump flow to the gas turbine engine (12) over a range of engine operating conditions in response to input from the gearbox (18) wherein the drive assembly (14) includes a driving pulley assembly including a fixed pulley sheave (30) and a movable pulley sheave (32), a driven pulley assembly including a fixed pulley sheave (30) and a movable pulley sheave (32), and a drive belt operatively connecting the driving pulley assembly to the driven pulley assembly; wherein varying the drive ratio of the drive assembly (14) involves driving the fuel pump (22) faster than the gearbox (18) in a start mode wherein engine fuel flow demand is relatively high and driving the fuel pump (22) slower than the gearbox (18) in a cruise mode wherein engine fuel flow demand is relatively low.

8. The fuel delivery method as recited in claim 7, further comprising sizing the fuel pump (22) to meet fuel flow demand for a specific engine operating condition, or further comprising sizing the fuel pump (22) to meet fuel flow demand in a take-off mode.

9. The fuel delivery method as recited in claim 7 or 8, wherein varying the drive ratio of the drive assembly (14) involves reducing the drive ratio from start mode to maximum engine power.

10. The fuel delivery method as recited in claim 7 or 8 wherein varying the drive ratio of the drive assembly (14) involves reducing the drive ratio immediately after start mode.

## Patentansprüche

1. Kraftstofffördersystem für einen Gasturbinenmotor (12), umfassend:
a) eine Kraftstoffpumpe (22); ein Getriebe (18) und
b) eine stufenlos einstellbare Antriebsbaugruppe (14), die durch das Getriebe (18) mit sowohl der Kraftstoffpumpe (22) als auch mit dem Gasturbinenmotor in betriebswirksamer Kommunikation steht und zum Einstellen der Leistung der Kraftstoffpumpe (22) ausgelegt ist, um sie an den Kraftstoffbedarf des Gasturbinenmotors anzupassen, und wobei die Antriebsbaugruppe (14) eine Antriebsriemenbaugruppe, die eine feste Riemenumlenkrolle (30) und eine bewegliche Riemenumlenkrolle (32) beinhaltet, eine Abtriebsriemenbaugruppe, die eine feste Riemenumlenkrolle (30) und eine bewegliche Riemenumlenkrolle (32) beinhaltet, und einen Antriebsriemen beinhaltet, der die Antriebsriemenbaugruppe mit der Abtriebsriemenbaugruppe betriebswirksam verbindet; und
ferner umfassend einen Regler zum Steuern eines Antriebsverhältnisses der Antriebsbaugruppe (14), um die Durchflussleistung der Kraftstoffpumpe über einen Bereich von Motorbetriebsbedingungen zu variieren, und wobei die Antriebsbaugruppe (14) zum schnelleren Antreiben der Kraftstoffpumpe (22) als das Getriebe (18) in einem Startmodus, in dem der Kraftstoffdurchflussbedarf des Motors relativ hoch ist, geregelt ist und zum langsameren Antreiben der Kraftstoffpumpe (22) als das Getriebe (18) in einem Reisemodus, in dem der Kraftstoffdurchflussbedarf des Motors relativ gering ist, geregelt ist.

2. Kraftstofffördersystem nach Anspruch 1, wobei die stufenlos einstellbare Antriebsbaugruppe (14) einen Antriebsabschnitt, der einem Getriebe (18) der Gasturbine betriebswirksam zugeordnet ist, und einen Abtriebsabschnitt aufweist, der der Kraftstoffpumpe (22) der Gasturbine betriebswirksam zugeordnet ist.

3. Kraftstofffördersystem nach einem der vorhergehenden Ansprüche, wobei die Kraftstoffpumpe (22) zum Erfüllen des Kraftstoffdurchflussbedarfs des Motors bei einem bestimmten Motorbetriebszustand bemessen ist.

4. Kraftstofffördersystem nach Anspruch 1, wobei der Antriebsabschnitt der Antriebsbaugruppe (14) mit einer von dem Getriebe (18) angetriebenen Eingangswelle verbunden ist und der Abtriebsabschnitt der Antriebsbaugruppe (14) mit einer Eingangswelle der Kraftstoffpumpe verbunden ist.

5. Kraftstofffördersystem nach Anspruch 1, ferner umfassend:
ein Getriebe (18), das mit dem Gasturbinenmotor betriebswirksam verbunden ist;
eine Kraftstoffpumpe (22), die zum Erfüllen des Kraftstoffdurchflussbedarfs des Motors bei einem bestimmten Motorbetriebszustand bemessen ist;
die stufenlos einstellbare Antriebsbaugruppe (14), die einen Antriebsabschnitt, der dem Getriebe (18) betriebswirksam zugeordnet ist, und einen Abtriebsabschnitt aufweist, der der Kraftstoffpumpe betriebswirksam zugeordnet ist; und
wobei der Regler dazu dient, ein Antriebsverhältnis der Antriebsanordnung (14) zu steuern, um die Durchflussleistung der Kraftstoffpumpe über einen Bereich von Motorbetriebsbedingungen hinweg zu variieren.

6. Kraftstofffördersystem nach einem der vorhergehenden Ansprüche, wobei die Kraftstoffpumpe (22) zum Erfüllen des Kraftstoffdurchflussbedarfs des Motors in einem Abflugmodus bemessen ist.

7. Kraftstoffförderverfahren für einen Gasturbinenmotor (12), umfassend:
a) Bereitstellen einer stufenlos einstellbaren Antriebsbaugruppe (14) zwischen einem Getriebe (18) des Gasturbinenmotors (12) und einer Kraftstoffpumpe (22) des Gasturbinenmotors; und
b) Variieren eines Antriebsverhältnisses der Antriebsbaugruppe (14) zum Anpassen der Durchflussleistung der Kraftstoffpumpe des Gasturbinenmotors (12) über einen Bereich von Motorbetriebsbedingungen als Reaktion auf eine Eingabe von dem Getriebe (18), wobei die Antriebsbaugruppe (14) eine Antriebsriemenbaugruppe, die eine feste Riemenumlenkrolle (30) und eine bewegliche Riemenumlenkrolle (32) beinhaltet, eine Abtriebsriemenbaugruppe, die eine feste Riemenumlenkrolle (30) und eine bewegliche Riemenumlenkrolle (32) beinhaltet, und einen Antriebsriemen beinhaltet, der die Antriebsriemenbaugruppe mit der Abtriebsriemenbaugruppe betriebswirksam verbindet; wobei das Variieren des Antriebsverhältnisses der Antriebsbaugruppe (14) schnelleres Antreiben der Kraftstoffpumpe (22) als das Getriebe (18) in einem Startmodus, in dem der Kraftstoffdurchflussbedarf des Motors relativ hoch ist, und langsameres Antreiben der Kraftstoffpumpe (22) als das Getriebe (18) in einem Reisemodus, in dem der Kraftstoffdurchflussbedarf des Motors relativ gering ist, einschließt.

8. Kraftstoffförderverfahren nach Anspruch 7, ferner umfassend Bemessen der Kraftstoffpumpe (22) zum Erfüllen des Kraftstoffdurchflussbedarfs bei einem bestimmten Motorbetriebszustand, oder ferner umfassend Bemessen der Kraftstoffpumpe (22) zum Erfüllen des Kraftstoffdurchflussbedarfs in einem Abflugmodus.

9. Kraftstoffförderverfahren nach Anspruch 7 oder 8, wobei das Variieren des Antriebsverhältnisses der Antriebsbaugruppe (14) Reduzieren des Antriebsverhältnisses von dem Startmodus auf die maximale Motorleistung einschließt.

10. Kraftstoffförderverfahren nach Anspruch 7 oder 8, wobei das Variieren des Antriebsverhältnisses der Antriebsbaugruppe (14) Reduzieren des Antriebsverhältnisses unmittelbar nach dem Startmodus einschließt.

## Revendications

1. Système de distribution de carburant pour un moteur à turbine à gaz (12) comprenant :
a) une pompe à carburant (22) ; une boîte de vitesses (18) et
b) un ensemble d'entraînement à variation continue (14) en communication fonctionnelle avec la pompe à carburant (22) et le moteur à turbine à gaz par l'intermédiaire de la boîte de vitesses (18) et étant configuré pour régler la sortie de la pompe à carburant (22) en fonction de la demande en carburant du moteur à turbine à gaz, et dans lequel l'ensemble d'entraînement (14) comprend un ensemble poulie motrice comprenant une poulie fixe (30) et une poulie mobile (32), un ensemble poulie entraînée comprenant une poulie fixe (30) et une poulie mobile (32), et une courroie d'entraînement reliant de manière fonctionnelle l'ensemble poulie motrice à l'ensemble poulie entraînée ; et
comprenant également un régulateur pour contrôler un rapport d'entraînement de l'ensemble d'entraînement (14) pour faire varier les performances de débit de la pompe à carburant sur une plage de conditions de fonctionnement du moteur, et dans lequel l'ensemble d'entraînement (14) est régulé pour entraîner la pompe à carburant (22) plus rapidement que la boîte de vitesses (18) dans un mode de démarrage dans lequel la demande de débit de carburant du moteur est relativement élevée et régulé pour entraîner la pompe à carburant (22) plus lentement que la boîte de vitesses (18) dans un mode croisière dans lequel la demande de débit de carburant du moteur est relativement faible.

2. Système de distribution de carburant selon la revendication 1, dans lequel l'ensemble d'entraînement à variation continue (14) comporte une partie d'entraînement associée de manière opérationnelle à une boîte de vitesses (18) de la turbine à gaz et une partie entraînée associée de manière opérationnelle à la pompe à carburant (22) de la turbine à gaz.

3. Système de distribution de carburant tel que décrit dans l'une quelconque des revendications précédentes, dans lequel la pompe à carburant (22) est dimensionnée pour répondre à la demande de débit de carburant du moteur pour une condition de fonctionnement spécifique du moteur.

4. Système de distribution de carburant selon la revendication 1, dans lequel la partie motrice de l'ensemble d'entraînement (14) est reliée à un arbre d'entrée entraîné par la boîte de vitesses (18) et la partie entraînée de l'ensemble d'entraînement (14) est reliée à un arbre d'entrée de la pompe à carburant.

5. Système de distribution de carburant selon la revendication 1, comprenant également :
une boîte de vitesses (18) associée fonctionnellement au moteur à turbine à gaz ;
une pompe à carburant (22) dimensionnée pour répondre à la demande de débit de carburant du moteur pour une condition de fonctionnement spécifique du moteur ;
l'ensemble d'entraînement à variation continue (14) comportant une partie motrice associée de manière opérationnelle à la boîte de vitesses (18) et une partie entraînée associée de manière opérationnelle à la pompe à carburant ; et
ledit régulateur permettant de contrôler un rapport d'entraînement de l'ensemble d'entraînement (14) pour faire varier les performances de débit de la pompe à carburant dans une gamme de conditions de fonctionnement du moteur.

6. Système de distribution de carburant tel que décrit dans l'une quelconque des revendications précédentes, dans lequel la pompe à carburant (22) est dimensionnée pour répondre à la demande de débit de carburant du moteur dans un mode de décollage.

7. Procédé d'alimentation en carburant pour un moteur à turbine à gaz (12) comprenant :
a) la fourniture d'un ensemble d'entraînement à variation continue (14) entre une boîte de vitesses (18) du moteur à turbine à gaz (12) et une pompe à carburant (22) du moteur à turbine à gaz ; et
b) faire varier un rapport d'entraînement de l'ensemble d'entraînement (14) pour ajuster le débit de la pompe à carburant vers le moteur à turbine à gaz (12) sur une plage de conditions de fonctionnement du moteur en réponse à une entrée provenant de la boîte de vitesses (18), dans lequel l'ensemble d'entraînement (14) comprenant un ensemble poulie d'entraînement comprenant une poulie fixe (30) et une poulie mobile (32), un ensemble poulie entraînée comprenant une poulie fixe (30) et une poulie mobile (32), et une courroie d'entraînement reliant de manière fonctionnelle l'ensemble poulie d'entraînement à l'ensemble poulie entraînée ; dans lequel la variation du rapport d'entraînement de l'ensemble d'entraînement (14) impliquant l'entraînement de la pompe à carburant (22) plus rapidement que la boîte de vitesses (18) dans un mode de démarrage dans lequel la demande de débit de carburant du moteur est relativement élevée et l'entraînement de la pompe à carburant (22) plus lentement que la boîte de vitesses (18) dans un mode croisière dans lequel la demande de débit de carburant du moteur est relativement faible.

8. Procédé de distribution de carburant tel que décrit dans la revendication 7, comprenant également le dimensionnement de la pompe à carburant (22) pour répondre à la demande de débit de carburant pour une condition de fonctionnement spécifique du moteur, ou comprenant également le dimensionnement de la pompe à carburant (22) pour répondre à la demande de débit de carburant dans un mode de décollage.

9. Procédé de distribution de carburant tel que décrit dans la revendication 7 ou 8, dans lequel la variation du rapport d'entraînement de l'ensemble d'entraînement (14) implique la réduction du rapport d'entraînement du mode de démarrage à la puissance maximale du moteur.

10. Procédé de distribution de carburant tel que décrit dans la revendication 7 ou 8, dans lequel la variation du rapport d'entraînement de l'ensemble d'entraînement (14) implique la réduction du rapport d'entraînement immédiatement après le mode de démarrage.
